## Europäisches Patentamt
## European Patent Office
## Office européen des brevets

(19)

(11) Veröffentlichungsnummer: **0 067 357**

**A1**

(12)

# EUROPÄISCHE PATENTANMELDUNG

(21) Anmeldenummer: **82104777.6**

(22) Anmeldetag: **01.06.82**

(51) Int. Cl.³: **B 65 G 51/08**

(30) Priorität: **12.06.81 DE 3123429**

(43) Veröffentlichungstag der Anmeldung:
**22.12.82 Patentblatt 82/51**

(84) Benannte Vertragsstaaten:
**AT BE CH DE FR GB IT LI NL SE**

(71) Anmelder: **Tesch, Klaus**
**Dorotheenstrasse 123**
**D-2000 Hamburg 60(DE)**

(72) Erfinder: **Tesch, Klaus**
**Dorotheenstrasse 123**
**D-2000 Hamburg 60(DE)**

(74) Vertreter: **Glawe, Delfs, Moll & Partner Patentanwälte**
**Postfach 26 01 62 Liebherrstrasse 20**
**D-8000 München 26(DE)**

(54) **Rohrpostanlage.**

(57) Bei einer Rohrpostanlage mit einem Gebläse zur Erzeugung des Förderluftstroms ist vor allem zur Verringerung des Bau- und Betriebsaufwands vorgesehen, daß die Druckseite (5) des Gebläses (4) über eine Injektordüse (7) an die Förderstrecke (1) der Anlage angeschlossen ist. Vorzugsweise wird die vom Gebläse (4) der Düse (7) zuzuführende Luft der Strecke in Strömungsrichtung unmittelbar vor der Düse (7) entnommen. Ferner kann es zweckmäßig sein, zwei Düsenanordnungen gegensinnig voneinander abgewandt demselben Gebläse umschaltbar zuzuordnen, so daß die Förderrichtung leicht gewechselt werden kann.

Fig.1

EP 0 067 357 A1

Croydon Printing Company Ltd.

Beschreibung

Die Erfindung bezieht sich auf eine Rohrpostanlage mit
einer Förderstrecke und einem daran zur Erzeugung des
Förderluftstroms angeschlossenen Gebläse.

Bei bekannten Rohrpostanlagen, die mit Überdruck auf
der Versandseite oder mit Unterdruck auf der Empfangseite arbeiten, muß das Gebläse jeweils am Förderstrekkenende angeordnet sein und muß dieses Ende der Förderstrecke nach dem Einsetzen des zu fördernden Artikels
geschlossen werden, damit der die Förderung bewirkende
Über- oder Unterdruck in der Strecke eingeschlossen wird.
Derartige Anordnungen arbeiten nur über verhältnismäßig
kurze Strecken wirtschaftlich. Ist Förderung über lange
Strecken erforderlich, sind daher mehrere Gebläsestationen mit Schleusenkammern erforderlich. Der mechanische
Aufwand ist beträchtlich. Die Notwendigkeit, die Strecke
auf einer Seite zu schließen, kann auch in der Handhabung
hinderlich sein. Die Anordnung des Gebläses an den Strekkenenden hat auch den Nachteil, daß die Gebläsegeräusche
den Bedienungspersonen lästig fallen oder aufwendig abgeschirmt werden müssen. Schließlich kann es bei den bekannten Anlagen auch Schwierigkeiten bereiten, eine rasche
Schußfolge durchzuführen.

Der Erfindung liegt die Aufgabe zugrunde,    den Bau- und
Bedienungsaufwand für eine Rohrpostanlage zu verringern,
auch die Förderung durch lange Strecken ohne Zwischenhalt
und ohne aufwendige Schieberstationen zu ermöglichen und

- 2 -

die Geräuschbelästigung an den Streckenenden zu verringern.

Die erfindungsgemäße Lösung besteht in den Merkmalen des Anspruchs 1 und gegebenenfalls der Unteransprüche.

Die erfindungsgemäße Injektordüse kann an beliebiger Stelle der Strecke und auch mehrfach vorgesehen sein. Die ihr zugeordneten, an die Saugseite des Gebläses angeschlossenen Abströmöffnungen sind zweckmäßig, damit die Förderluftmenge in der Förderstrecke und damit die Luftgeschwindigkeit nicht unerwünscht vermehrt wird. Die Düsen werden zweckmäßigerweise als Ringdüsen ausgeführt, was aber nicht unbedingt erforderlich ist. Insbesondere beim Vorkommen relativ langer zu fördernder Artikel kann es zweckmäßig sein, statt einer örtlich begrenzten Düse eine Mehrzahl von Düsen in einem begrenzten Bereich der Förderstrecke zu verteilen, deren Länge etwas größer ist als die größte Länge der zu fördernden Artikel. Entsprechendes gilt für die Abströmöffnungen. Statt dessen kann auch vorgesehen sein, daß die Förderstrecke im Bereich der Düsen beziehungsweise der Abströmöffnungen auf eine Länge erweitert ist, die größer ist als die Artikellänge. Die Abströmöffnungen sind zweckmäßigerweise nahe der Düse angeordnet. Wenn mehrere Düsen über einen gewissen Streckenbereich verteilt sind, kann auch jeder Düse eine Abströmöffnung zugeordnet sein. Eine Querschnittserweiterung ist in diesem Fall nicht erforderlich, weil jeweils dann, wenn eine oder mehrere Düsen mit den zugehörigen Abströmöffnungen verdeckt sind, die anderen funktionsfähig bleiben.

....

Sehr leicht läßt sich mit der erfindungsgemäßen Anordnung auch eine Umkehr der Förderrichtung erreichen, indem zwei Düsen gegensinnig voneinander abgewendet mit
dazwischenliegenden Abströmöffnungen vorgesehen werden,
wobei die Druckseite des Gebläses wechselweise an die
eine oder andere Düse angeschlossen wird. Es kann auch
vorgesehen sein, daß die Düsenöffnungen der einen Düse
während der Aktivität der anderen Düse als Saugöffnung
verwendet wird. Da aber die Düsenquerschnitte zur Erzeugung der erforderlichen hohen Luftgeschwindigkeiten
im allgemeinen eng sind, ist es zweckmäßig, jeder Düse
noch eine zusätzliche Abströmöffnung mit Rückschlagklappe
zuzuordnen, wobei letztere nur dann geöffnet ist, wenn
sie an die Gebläsesaugseite angeschlossen ist.

Die Erfindung wird im folgenden näher unter Bezugnahme
auf die Zeichnung erläutert, die drei Ausführungsbeispiele in drei Figuren schematisch darstellt.

Die Förderstrecke 1 mit dem Versendeende 2 und dem
Empfangsende 3, die auch die Teilstrecke einer größeren Förderstrecke sein kann, ist mit einem Gebläse 4
verbunden, das über eine Druckleitung 5 an den Ringraum
6 einer Ring-Injektordüse 7 angeschlossen, die in der
Förderstrecke 1 eine Förderströmung in Pfeilrichtung
hervorruft. An die Stelle einer Injektordüse 7 können
auch mehrere, in kurzem Abstand hintereinander angeordnete Ring-Injektordüsen oder Injektordüsen anderer Gestalt treten, die parallel beaufschlagt sind und sich
über einen Bereich erstrecken, der länger ist als die
Länge des zu fördernden Gegenstands 11.

- 4 -

Das Gebläse 4 kann aus der Atmosphäre ansaugen. In diesem Fall erzeugt es zweckmäßigerweise einen hohen Differenzdruck, um mit kleiner Luftmenge die erforderliche Förderwirkung auf die Strecke 1 ausüben zu können. Zweckmäßiger ist jedoch die Ansaugung aus der Strecke 1 vor der Düse 7, wodurch erreicht wird, daß die Luftmenge in der Strecke konstant bleibt. Die Abströmöffnungen 8 sind über eine solche Länge kurz vor der Düse 7 verteilt, daß sie nicht vollständig von dem längsten zu fördernden Artikel 11 verdeckt werden können. Sie münden in einen Abströmraum 9, der über die Saugleitung 10 an das Gebläse 4 angeschlossen ist.

Man erkennt, daß der zu fördernde Artikel 11 ohne anzuhalten durch die Gebläsestation hindurchbewegt werden kann. Und zwar ist die Luftgeschwindigkeit in der Strecke 1 zwischen den Öffnungen 8 und der Düse 7 etwas geringer als im übrigen Bereich der Strecke; jedoch läßt sich die Anordnung leicht so bemessen, daß auch hier noch eine hinreichende Fördergeschwindigkeit vorhanden ist, sofern nicht die Massenträgheit der zu fördernden Gegenstände als solche schon dafür sorgt, daß sie sich durch die Station bewegen können. Im übrigen hat sich gezeigt, daß selbst dann, wenn ein Gegenstand im Bereich zwischen den Öffnungen 8 und der Düse 7 festgehalten wird, er sich aufgrund der Pumpwirkung der Düse 7 wieder in Förderrichtung in Bewegung setzt.

Statt einer Verteilung der Öffnungen 8 über eine Strecke, die länger ist als die zu fördernden Artikel 11, kann auch vorgesehen sein, daß der Querschnitt des Rohrs in diesem Bereich ein wenig größer ist als derjenige der zu fördernden Artikel. Dabei ist vorausgesetzt, daß diese, wie bei Rohrpostpatronen üblich, den Rohrquerschnitt im übrigen vollständig ausfüllen. Jedoch ist dies zur Erzielung einer
befriedigenden Förderwirkung nicht immer erforderlich.
Häufig genügt es, die zu fördernden Artikel als solche
dem Luftstrom zur Förderung zu überlassen, und zwar
auch dann, wenn sie wesentlich kleiner sind als der Querschnitt des Rohrs.

Man erkennt, daß die Anlage äußerst einfach aufgebaut
ist. Insbesondere fehlen bewegte Teile, Verschlußglieder
und Schleusen. Aufwendige Schieberstationen entfallen
selbst bei langen Strecken. Das Gebläse braucht nicht an
den Streckenenden angeordnet zu sein (obwohl dies
möglich ist), so daß dort eine wesentliche Geräuschreduzierung festgestellt werden kann. Die Abwesenheit
von Schleusen und Verschlußgliedern ermöglicht eine beliebig dichtige Förderfolge.

Während die Drücke bislang verwendeter Rohrpostgebläse
bei einigen 0,1 bar liegen, werden für das erfindungsgemäße Gebläse zweckmäßigerweise höhere Drücke veranschlagt,
damit sich in der Strecke selbst wiederum Druckdifferenzen
in der bisher üblichen Größenordnung ergeben. Häufig genügen aber auch kleinere Druckdifferenzen, zumal bei längeren Strecken eine Mehrzahl von Gebläsestationen leicht
vorgesehen werden kann.

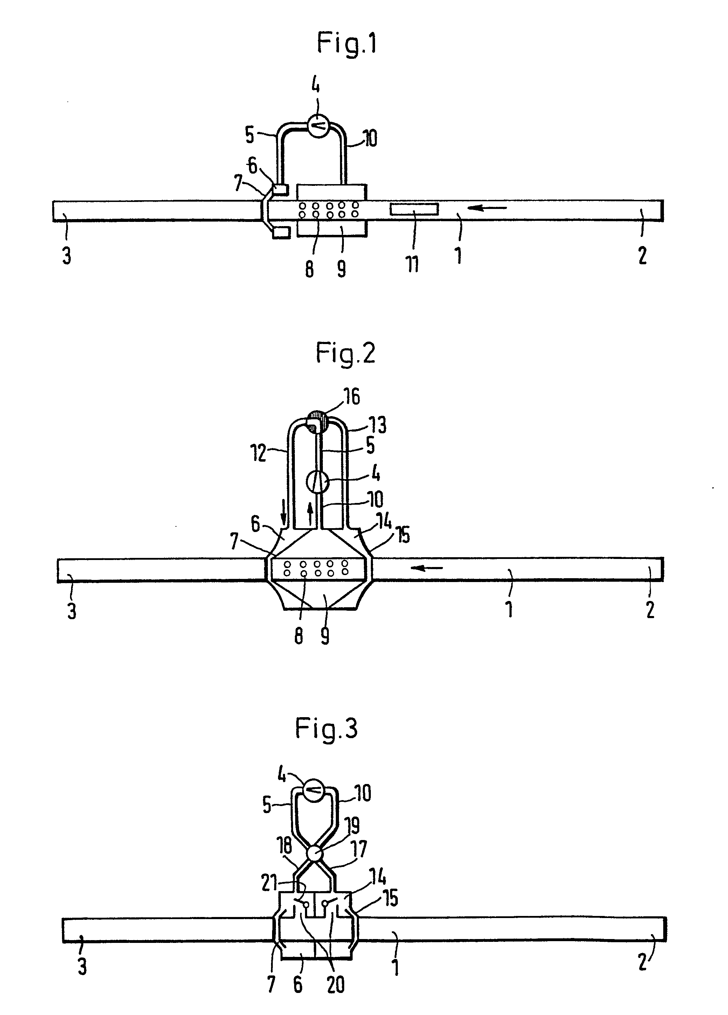

Das Ausführungsbeispiel gemäß Fig. 1 ist für die Förderung in einer Richtung ausschließlich vorgesehen. Demgegenüber läßt sich die Förderrichtung des Beispiels gemäß
Fig. 2 leicht umkehren. Man erkennt dort, daß der Düsenanordnung 6, 7 spiegelbildlich entgegengesetzt eine entsprechende Düsenanordnung 10, 15 zugeordnet ist, wobei die Abströmöffnungen 8 mit dem zugehörigen Ringgehäuse 9
dazwischen angeordnet sind. Das Gebläse 4 ist mit seiner
Saugleitung 10 an das Ringgehäuse 9 der Abströmöffnungen 8 und mit seiner Druckleitung 5 an einen Mehrwegehahn 16 angeschlossen, der die Druckseite des Gebläses
wahlweise über Leitung 12 an die Düsenanordnung 6, 7
oder über Leitung 13 an die Düsenanordnung 14, 15 anschließt. Dargestellt ist der Anschluß an die Düse 7
mit der durch Pfeile angedeuteten Strömungsrichtung.
Zum Wechsel der Förderrichtung wird der Hahn 16 umgestellt. Die Abströmöffnungen 8 dienen in diesem Fall beiden Düsen.

Ebenfalls im Beispiel gemäß der Fig. 3 sind zwei gegensinnige Ring-Injektordüsen 7 und 15 vorgesehen, die von
Kammern 6 beziehungsweise 14 gespeist werden, die an Rohre
18, 17 angeschlossen sind, welche über einen Mehrwegehahn
19 wechselweise an die Druckleitung 5 beziehungsweise an
die Saugleitung 10 des Gebläses 4 anschließbar sind. Außerdem enthält die Förderstrecke im Bereich jeder Kammer 6,
14 eine weitere Öffnung 20 als Abströmöffnung, die über
eine Rückschlagklappe 21 jeweils dann geschlossen wird,
wenn in der dazugehörigen Kammer 6, 10 Überdruck gegenüber
der Förderstrecke herrscht. Wird beispielsweise die Kammer
6 der Düse 7 mit der Druckseite 5 des Gebläses verbunden,
so schließt die dortige Rückschlagklappe 21, so daß die
Druckluft ausschließlich über die Düse in die Förderstrecke
1 strömt. Hingegen öffnet sich die Klappe 21 in der Kammer
14, um der Saugluft als Durchströmquerschnitt außer demjenigen der Düse 15 auch den der zugehörigen Abströmöffnung
20 zur Verfügung zu stellen.

Ansprüche
-----------------

1. Rohrpostanlage mit einem Gebläse zur Erzeugung,
   des Förderluftstroms, dadurch gekennzeichnet, daß
   die Druckseite (5) des Gebläses (4) über eine oder
   mehrere Injektordüsen (7) an die Förderstrecke (1)
   der Anlage angeschlossen ist.

2. Rohrpostanlage nach Anspruch 1 , dadurch gekennzeichnet, daß in Strömungsrichtung vor der Düse (7) oder den
   Düsen in der Förderstrecke (1) mindestens eine Abströmöffnung (8) vorgesehen ist, die an die Saugseite (10)
   des Gebläses (4) angeschlossen ist.

3. Rohrpostanlage nach Anspruch 2 , dadurch gekennzeichnet, daß die Öffnung(en) (8) eine größere Längserstreckung aufweist (aufweisen), als die zu fördernden
   Artikel (11).

4. Rohrpostanlage nach einem der Ansprüche 1 bis 3, dadurch gekennzeichnet, daß das Gebläse (4) druckseitig an zwei entgegengesetzte voneinander weggerichtete Injektordüsen (7, 15) alternativ anschließbar ist.

5. Rohrpostanlage nach Anspruch 4, dadurch gekennzeichnet, daß die ständig an die Seite (10) des Gebläses (4) angeschlossene(n) Öffnung(en) (8) zwischen den beiden Düsen (7, 15) angeordnet ist (sind).

6. Rohrpostanlage nach einem der Ansprüche 1 bis 5, dadurch gekennzeichnet, daß die Injektordüse als Ringdüse ausgebildet ist.

7. Rohrpostanlage nach einem der Ansprüche 1 bis 6, dadurch gekennzeichnet, daß die Förderstrecke im Bereich der Ringdüse auf einer Strecke, die größer ist als die Länge der zu fördernden Artikel, erweitert ist.

8. Rohrpostanlage nach einem der Ansprüche 1 bis 7, dadurch gekennzeichnet, daß mehrere Düsen über eine kurze Strecke verteilt sind, deren Länge größer ist als die Länge der zu fördernden Artikel.

9. Rohrpostanlage nach einem der Ansprüche 1 bis 8, dadurch gekennzeichnet, daß mehrere Düsenstationen schleusenfrei über die gesamte Förderstrecke verteilt sind.

10. Rohrpostanlage nach einem der Ansprüche 1 bis 9, daß jede Düsenstation Abstand von jedem Streckenende (2, 3) aufweist.

11. Rohrpostanlage nach einem der Ansprüche 1 bis 10, dadurch gekennzeichnet, daß bei gegensinnig doppelter Anordnung der Düsen (7, 15) die Abströmöffnung(en) (8) nicht an die Druckseite des Gebläses (4) angeschlossenen Düse gebildet ist.

12. Rohrpostanlage nach Anspruch 11, dadurch gekennzeichnet, daß jeder Düse eine zusätzliche Abströmöffnung mit Rückschlagklappe zugeordnet ist.

Fig.1

Fig.2

Fig.3

Europäisches
Patentamt

**EUROPÄISCHER RECHERCHENBERICHT**

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| X | GB - A - 1 379 260 (BRITISH HYDROMECHANICS RESEARCH ASSOCIATION) <br> * Seite 1, Zeilen 23 bis 55; Seite 3, Zeilen 47 bis 63; Seite 4, Zeilen 54 bis 73; Fig. 1, 5 * | 1,2, 4-6,9 | B 65 G 51/08 |
| | -- | | |
| X | DE - B2 - 2 163 947 (GEORGIA TECH RESEARCH INSTITUTE) <br> * Spalte 3, Zeilen 11 bis 63; Fig. 1, 2 * | 1,2,6 | **RECHERCHIERTE SACHGEBIETE (Int. Cl.³)** |
| | -- | | |
| X | US - A - 2 015 958 (NEEDHAM) <br> * Seite 1, rechte Spalte, Zeilen 8 bis 30; Fig. * | 1,2,6 | B 65 G 51/00 |
| | -- | | |
| X | DE - A - 2 019 505 (COANDA) <br> * Fig. 1, 3 * | 1 | |
| | ---- | | |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 02-09-1982 | SIMON |

EPA form 1503.1   06.78